# FASCICULE DE BREVET EUROPEEN

(11) **EP 1 116 013 B1**
(45) Date de publication et mention de la délivrance du brevet: **15.12.2004**
(21) Numéro de dépôt: 99969142.1
(22) Date de dépôt: 07.09.1999
(51) Int. Cl.: G01L 1/18, G01L 1/20

(54) **CAPTEUR DE FORCE**
KRAFTWANDLER
FORCE SENSOR

(30) Priorité: 11.09.1998 LU 90286
(43) Date de publication de la demande: 18.07.2001
(73) Titulaire: IEE INTERNATIONAL ELECTRONICS & ENGINEERING S.A., 6468 Echternach (LU)
(72) Inventeur: SERBAN, Bogdan, L-4610 Niederkorn (LU); SCHOOS, Aloyse, L-8094 Bertrange (LU); HUEGENS, Emmanuel, B-6700 Arlon (BE)
(74) Mandataire: Beissel, Jean
(86) Numéro de dépôt international: PCT/EP1999/006593
(87) Numéro de publication internationale: WO 2000/016053

(56) Documents cités:
- US-A- 4 314 227
- US-A- 4 856 993
- US-A- 5 296 837

## Description

La présente invention concerne un capteur de force du type à résistance électrique variable en fonction de la force appliquée.

Les capteurs de force ou de pression dont la résistance électrique varie en fonction de la force appliquée sont connus sous le nom de FSR (force sensing resistor) et permettent de détecter directement la valeur de la force appliquée sur la surface active du capteur. De tels capteurs sont p.ex. décrits dans les documents EP-A-0 649 518 et US-A-4,314,227. Ils comprennent deux feuilles support flexibles en matière isolante, qui sont disposées face à face à une certaine distance au moyen d'un écarteur intercalé. L'écarteur comprend p.ex. une bande adhésive double face qui est découpée de manière à entourer au moins en partie la zone active du capteur. A l'intérieur de la zone active, une des feuilles support est munie de deux structures d'électrodes en matériau conducteur espacées l'une de l'autre, tandis que l'autre feuille support est munie d'un revêtement en matériau semi-conducteur ou résistif, sensible à la pression. Le matériau semi-conducteur ou résistif peut soit présenter une résistance interne qui diminue quand la couche est comprimée, soit présenter des microsaillies à la surface, de telle sorte que la résistance de surface entre la couche et un conducteur diminue quand la couche est pressée sur le conducteur.

Lorsqu'aucune pression n'agit sur le capteur de pression, la couche en matériau semi-conducteur n'est pas en contact avec les deux électrodes et la résistance électrique entre les deux électrodes est par conséquent très élevée. Si par contre on applique une pression sur le capteur, les deux feuilles support sont pressées ensemble et la couche sensible à la pression se met en contact avec les deux électrodes. On réalise de cette manière un court-circuit entre les deux électrodes, dont la résistance électrique varie inversement avec la valeur de la pression appliquée. Plus la pression sur le capteur augmente, plus la couche semi-conductrice est comprimée resp. plus elle entre en contact intime avec les électrodes et plus la résistance mesurée entre les deux électrodes diminue.

Dans une exécution du capteur selon le document US-A-4,314,227, chaque électrode comprend des doigts s'étendant à partir d'une structure conductrice principale, lesdits doigts des deux électrodes étant disposés de manière à s'engrener les uns dans les autres. Les deux électrodes sont revêtues d'une couche en matériau semi-conducteur, tandis que l'autre feuille support est munie d'un revêtement en matériau conducteur. Un tel capteur présente une très bonne dynamique due aux multiples points de contact entre le revêtement en matériau conducteur et la couche en matériau sensible à la pression sur les doigts des deux électrodes. La disposition en alternance des doigts des deux électrodes entraîne par contre des problèmes au niveau des tolérances de production. En effet, due à la distance réduite entre deux doigts voisins, les variations de production dans ce genre de capteurs mènent souvent à des courts-circuits entre les deux électrodes et donc à des capteurs non utilisables. Il s'ensuit que les tolérances de production de ces capteurs sont très sévères, ce qui rend la production lente et coûteuse.

L'objet de la présente invention est de proposer un capteur de force, qui est moins sensible aux variations de production.

Cet objectif est atteint par un capteur de force tel que défini dans la revendication indépendante de dispositif 1. Les modes particuliers de réalisation de l'invention sont définis dans les revendications dépendantes 2 à 8. Le capteur de force comprend deux électrodes en matériau conducteur, qui sont disposées de manière espacée sur un premier support isolant, chacune desdites deux électrodes étant revêtue d'une couche en matériau sensible à la pression, les deux couches en matériau sensible à la pression étant électriquement isolées l'une par rapport à l'autre, et un élément de contact en matériau conducteur est placé à distance des deux électrodes, ledit élément de contact étant pressé contre lesdites électrodes lorsqu'une force est exercée sur le capteur de force. Conformément à l'invention, chaque électrode comprend un conducteur placé substantiellement à la périphérie d'une zone active du capteur et la couche en matériau sensible à la pression recouvrant chaque électrode s'étend vers l'intérieur de la zone active, les deux couches sensibles à la pression étant séparées par un interstice qui passe sensiblement par le centre de la surface active.

Bien qu'un tel capteur présente une dynamique légèrement inférieure à celle des capteurs connus dans l'état de le technique, sa dynamique est assez bonne pour beaucoup d'applications où cette bonne dynamique n'est pas exigée. Par contre, vu à la disposition des électrodes, bien distancées, des courts-circuits entre les électrodes causés par des variations de production sont nettement réduits par rapport à ce dernier. Seuls des courts-circuits entre les deux couches sensibles à la pression peuvent se produire. Mais grâce à la résistance spécifique très élevée de ces courts-circuits entre les couches sensibles à la pression, se situant au dessus du seuil de fonctionnement du capteur, ces éventuels courts-circuits ne perturbent pas le bon fonctionnement du capteur.

Par conséquent, les tolérances de production pour un tel capteur peuvent être moins strictes, ce qui fait que la production peut être plus rapide. De plus, la production de capteurs non conformes aux spécifications est nettement réduite, ce qui augmente la productivité de la ligne de production.

En plus des avantages précités, l'utilisation de la couche sensible à la pression pour recouvrir les électrodes protège les surfaces de ces dernières du contact avec l'air. Cela élimine un sérieux problème posé par l'utilisation des électrodes qui s'oxydent lentement lorsqu'elles sont exposées à l'air.

La couche en matériau sensible à la pression peut comprendre soit des microsaillies à la surface, de telle manière que la résistance de surface entre la couche et l'élément de contact diminue avec la pression exercée sur la jonction entre la couche et l'élément de contact, soit un matériau, dont la résistance spécifique varie inversement avec une compression dudit matériau, soit une combinaison des deux. Il peut par exemple s'agir d'un polymère semi-conducteur ou d'un élastomère conducteur.

Afin d'ajuster la dynamique et la sensibilité d'un tel capteur aux besoins spécifiques d'une application, la couche en matériau sensible à la pression comprend de préférence des inclusions de matériau conducteur, lesdites inclusions en matériau conducteur étant disposées de manière à modifier la résistance spécifique de la couche en matériau sensible à la pression. Ceci constitue un avantage très important si on veut fabriquer plusieurs capteurs ayant différentes sensibilités sur un même support, notamment pour la fabrication de détecteurs d'occupation de siège, qui comprennent plusieurs capteurs de force disposés l'un à côté de l'autre sur une feuille. Une telle fabrication devient dès lors possible sans devoir utiliser différents matériaux sensibles à la pression pour les différentes sensibilités. Il suffit de varier le nombre et la disposition des inclusions de manière adéquate pour arriver à la sensibilité désirée.

La sensibilité de chaque capteur de force peut donc être adaptée par une modification de la disposition géométrique de ses différents composants. Ainsi la sensibilité est adaptable dans une large gamme à tous les besoins et surtout elle devient facilement reproductible c'est-à-dire il sera très facile de reproduire exactement une sensibilité désirée. De plus, la sensibilité de la cellule devient largement indépendante de l'épaisseur de la couche en matériau sensible à la pression, ce qui permet d'augmenter davantage la vitesse de fabrication des capteurs.

L'élément de contact en matériau conducteur comprend de préférence une couche en matériau conducteur, p.ex. en graphite, appliquée sur un deuxième support flexible. Le deuxième support est alors disposé à distance dudit premier support à l'aide d'un écarteur situé à l'extérieur d'une zone active, de sorte qu'à l'intérieur de ladite zone active, la couche en matériau conducteur fasse face auxdites électrodes. Ledit écarteur comprend avantageusement un adhésif imprimable qui sert à coller ledit premier substrat audit deuxième substrat. L'adhésif peut p.ex. être appliqué par sérigraphie tout comme les électrodes et les couches en matériau sensible à la pression, ou par impression par pulvérisation. Après l'impression de l'adhésif et l'assemblage des deux supports, l'adhésif est durci par exemple par cuisson.

L'utilisation d'un adhésif imprimable permet une très grande liberté de design des capteurs de force, notamment lors de la fabrication d'un ensemble de capteurs sur un substrat, comme des détecteurs d'occupation. En effet, jusqu'à présent, on utilisait généralement une bande adhésive double face en tant qu'écarteur. Cette bande adhésive était découpée avant l'assemblage de sorte qu'elle présentait des découpes en forme des zones actives aux endroits qui, après l'assemblage du capteur, correspondaient aux zones actives de celui-ci. Afin de prévoir, dans le capteur assemblé, des canaux de ventilation, qui relient les zones actives avec l'environnement et qui permettent ainsi une égalisation des pressions entre les zones actives et l'environnement, ces découpes doivent en partie être reliées par des découpes minces. De cette pratique résultent évidemment des limitations assez strictes pour le design des détecteurs, car après l'application des découpes de l'écarteur, celui-ci doit former encore une seule pièce afin que l'on puisse le manipuler lors de l'assemblage du détecteur. En plus, sa forme doit être adaptée pour pouvoir facilement enlever une feuille protectrice sur les surfaces adhésives.

Toutes ces limitations pour la forme de l'écarteur ne jouent plus lorsque ce dernier est simplement imprimé par une technique adaptée sur un substrat ou sur les substrats avant l'assemblage de ceux-ci.

Afin de garantir un espacement régulier des deux supports sur toute l'extension du capteur, des particules écarteurs ayant un diamètre correspondant substantiellement à l'espacement désiré des deux substrats sont de préférence disposées à l'intérieur dudit adhésif imprimable. Ces particules écarteurs peuvent être mélangées dans l'adhésif liquide et appliquées ensemble avec celui-ci, ou elles peuvent être introduites dans l'adhésif après l'application de celui-ci.

Le capteur de force tel que décrit ci-dessus est donc spécialement bien adapté pour fabriquer des détecteurs d'occupation d'un siège, comprenant un ou plusieurs capteurs de force. Il permet une production rapide et très productive de tels détecteurs d'occupation tout en minimisant les pertes de production. Le procédé de fabrication ayant éliminé en grande partie les contraintes pour le design des détecteurs, celui-ci pourra être facilement adapté pour minimiser p.ex. les pertes de substrat par découpage.

D'autres particularités et caractéristiques de l'invention ressortiront de la description détaillée de quelques modes de réalisation avantageux présentés ci-dessous, à titre d'illustration, en référence aux dessins annexés. Celles-ci montrent:
- Fig.1:: une coupe transversale à travers une exécution favorable d'un capteur de force,
- Fig.2:: une vue sur le premier substrat de deux modes d'exécution d'un capteur de force,
- Fig.3:: une vue schématique sur un détecteur d'occupation de siège,
- Fig.4:: la disposition de plusieurs détecteurs d'occupation de siège lors de leur fabrication.

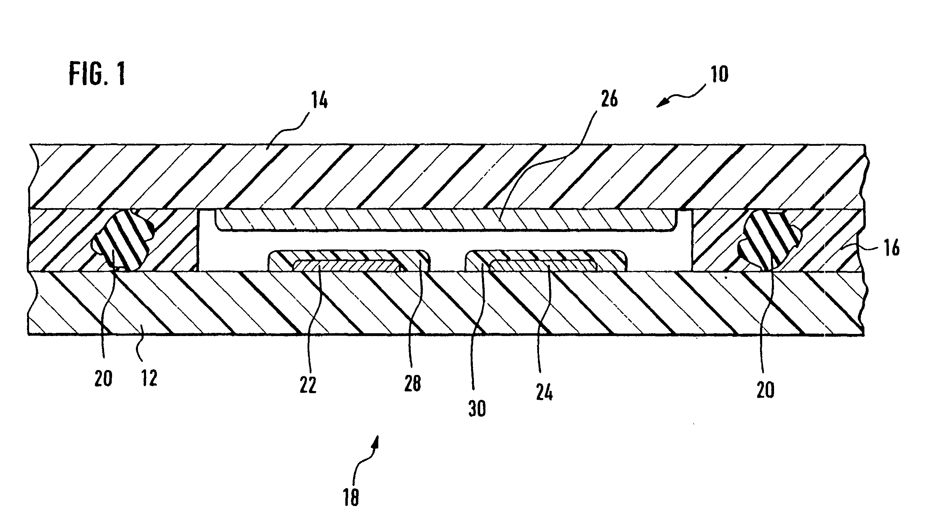

Une coupe transversale d'une exécution favorable d'un capteur de force selon la présente invention est représentée dans la fig. 1. Le capteur de force 10 comprend un premier support 12 isolant et un deuxième support 14, p.ex. des feuilles en PET, PES, PEN, PEI, PI, etc., qui sont disposées face à face à une certaine distance au moyen d'un écarteur 16 intercalé. L'écarteur peut comprendre une bande adhésive double face qui est découpée de manière à entourer au moins en partie la zone active 18 du capteur 10. Dans une version préférée par contre, l'écarteur comprend un adhésif imprimable p.ex. par sérigraphie ou par pulvérisation, qui sert à coller les deux supports 12 et 14 ensemble et qui se solidifie avant ou après l'assemblage des feuilles support. Afin de garantir un espacement régulier des deux supports, des particules écarteurs 20 ayant un diamètre substantiellement égal à l'espacement prévu des deux supports 12, 14 peuvent être introduits dans l'adhésif, soit avant son application, soit après celle-ci.

A l'intérieur de la zone active 18, la première feuille support 12 est munie de deux structures d'électrodes 22, 24 en matériau conducteur, p.ex. de l'argent, espacées l'une de l'autre, qui sont de préférence imprimées par sérigraphie sur le support 12. La deuxième feuille support 14 est munie d'un élément de contact 26 en matériau conducteur. Il s'agit p.ex. simplement d'une couche de graphite ou de métal qui est imprimée, laminée ou gravée sur le deuxième support 14.

Afin de conférer au capteur une résistance qui varie avec la pression exercée sur sa zone active, au moins une des électrodes du capteur est revêtue d'un matériau semi-conducteur ou résistif, sensible à la pression. Ce matériau semi-conducteur ou résistif peut soit présenter une résistance interne qui diminue quand la couche est comprimée, soit présenter des microsaillies à la surface, de telle sorte que la résistance de surface entre la couche et un conducteur diminue quand la couche est pressée sur le conducteur. Dans le premier cas la sensibilité du capteur repose sur un effet de surface, dans le deuxième cas, elle repose sur un effet de volume. Il peut s'agir p.ex. d'un polymère semi-conducteur ou d'un élastomère conducteur.

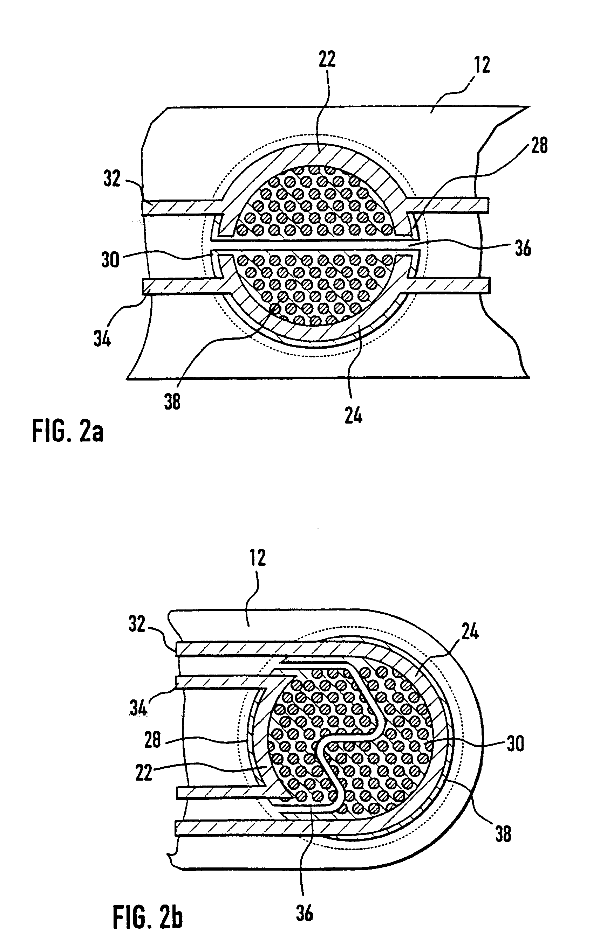

Dans l'exécution représentée dans les fig. 1 et 2, les deux électrodes 22 et 24 sont revêtues d'une couche 28 resp. 30 en matériau semi-conducteur ou résistif, sensible à la pression, les deux revêtements 28 et 30 étant électriquement isolés l'un de l'autre.

Lorsqu'une force est exercée sur la zone active 18 du capteur 10, les deux feuilles support 12 et 14 sont pressées ensemble et l'élément conducteur 26 se met en contact avec les revêtements 28 et 30 des deux électrodes. Ainsi un contact électrique est formé entre les deux électrodes, dont la résistance dépend soit de la résistance de surface à la jonction entre la couche sensible à la pression et l'élément contact, soit de la résistance spécifique du matériau semi-conducteur ou résistif des couches 28 et 30. Dans les deux cas, c'est-à-dire pour les deux types de matériau sensible à la pression, la résistance concernée diminue quand la force appliquée augmente.

Plusieurs modes de réalisation des électrodes sont représentés à la fig. 2. Les deux capteurs représentés comprennent des électrodes 22 et 24 sous forme de lignes conductrices simples, qui sont disposées à la périphérie de la zone active du capteur. A ces lignes conductrices se raccordent les conducteurs nécessaires pour brancher le capteur à une unité de commande ou pour le connecter en série ou en parallèle avec un autre capteur. Pour le capteur représenté sous a), ces conducteurs s'étendent des deux côtés du capteur car il s'agit d'un capteur placé au milieu d'une languette comprenant plusieurs capteurs branchés en parallèle, tels qu'ils sont utilisés dans des détecteurs d'occupation de sièges. Pour le capteur représenté sous b), il s'agit d'un capteur qui est p.ex. disposé à l'extrémité d'une telle languette.

Dans cette exécution, les couches 28 et 30 en matériau sensible à la pression recouvrant les électrodes s'étendent vers l'intérieur de la zone active pour être séparées par un interstice 36 qui passe sensiblement par le centre de la surface active. La distance entre les surfaces de contact efficaces peut donc être très petite sans pour autant devoir rapprocher les électrodes. Les électrodes peuvent donc présenter un écart entre eux, qui est nettement supérieur à celui dans la version avec les doigts. Ceci réduit considérablement les courts-circuits directs entre les électrodes dus aux variations de production, et donc la production de capteurs non-conformes aux spécifications.

Seuls des courts-circuits entre les deux couches 28 et 30 sensibles à la pression peuvent se produire. Mais grâce à la résistance spécifique très élevée de ces courts-circuits entre les couches sensibles à la pression, se situant au dessus du seuil de fonctionnement du capteur, ces éventuels courts-circuits ne perturbent pas le bon fonctionnement du capteur.

Afin d'ajuster la dynamique et la sensibilité du capteur aux besoins spécifiques d'une application, la couche 28, 30 en matériau sensible à la pression comprend de préférence des inclusions de matériau conducteur. Il s'agit p.ex. de points en argent ou en un autre métal, qui sont imprimés simultanément avec les conducteurs des électrodes. Ces inclusions 38 en matériau conducteur sont disposées de manière à modifier la résistance spécifique de la couche 28, 30 en matériau sensible à la pression. Dans une autre exécution, les points en métal et les électrodes pourraient être gravées simultanément par une attaque chimique d'une couche en métal déposée sur le substrat.

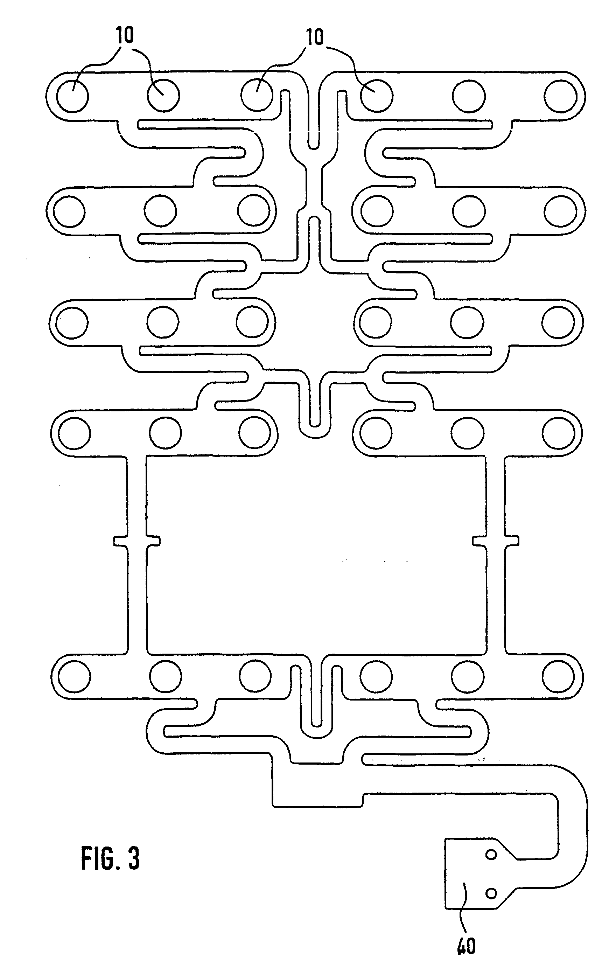

Cette possibilité de varier la sensibilité constitue un avantage très important pour la fabrication de détecteurs d'occupation de siège, qui comprennent plusieurs capteurs de force disposés l'un à côté de l'autre sur une feuille. Un tel détecteur est schématiquement représenté dans la fig. 3.

Il comprend plusieurs capteurs de force 10 disposés dans un plan et reliés par leurs feuilles support 12 resp. 14. Dépendant du mode de détection de l'occupation, les capteurs 10 individuels peuvent être connectés soit en parallel soit en matrice par plusieurs conducteurs de lignes et de colonnes.

Lors de la fabrication d'un tel détecteur, les électrodes des différents capteurs 10 individuels sont imprimés sur une première feuille de substrat ensemble avec les conducteurs reliant les capteurs entre eux et a une borne de raccordement 40. Le cas échéant on imprime simultanément les points 38 en argent.

Ensuite les couches sensibles à la pression sont imprimés sur les électrodes aux endroits appropriés.

Pendant ce temps, on imprime les éléments conducteurs en graphite sur une deuxième feuille de substrat et ensuite l'adhésif imprimabie qui sert d'écarteur.

Au cas ou l'adhésif ne comprend pas de particules écarteurs, celles-ci sont introduites immédiatement après l'application de l'adhésif.

Ensuite les deux feuilles support sont assemblées tout en ajustant leur position relative de sorte que les éléments de contact sur le deuxième support font exactement face aux électrodes et couches en matériau sensible à la pression sur le premier support. Finalement le détecteur fini est découpé du sandwich produit de cette manière.

Dans un autre procédé de fabrication très avantageux, les électrodes en argent et les éléments conducteurs sont imprimées simultanément sur deux zones adjacentes d'une même feuille substrat, évitant ainsi une phase d'impression supplémentaire. Dans une deuxième phase d'impression, on peut alors imprimer la couche sensible à la pression et l'adhésif sur la feuille support, la couche sensible à la pression étant imprimée aux endroits appropriés dans la zone des électrodes, l'adhésif étant imprimée aux endroits appropriés dans la zone des éléments conducteurs. Finalement le capteur est assemblé en repliant les deux zones l'une sur l'autre le long d'une ligne de séparation des deux zones adjacentes et le détecteur fini est découpé de ce sandwich. Il est à noter que la feuille support peut être découpée le long de la ligne de séparation avant le repliage d'une zone sur l'autre.

Le fait d'imprimer toutes les couches du capteur à fabriquer sur une seule feuille de support permet de définir dans les deux zones des points de référence très exacts, qui servent plus tard à ajuster la position des deux feuilles supports, resp. des deux zones de feuille support, l'une par rapport à l'autre. Ceci améliore nettement la précision de l'assemblage des deux zones de feuille support ("matching") et conduit donc à des capteurs ayant des tolérances de production très faibles. La production de capteurs non conformes aux spécifications est par conséquent nettement réduite, ce qui augmente la productivité de la ligne de production.

Il est à noter que pour les deux procédés de fabrication, le capteur selon la présente invention permet un contrôle en ligne ("online") facile et rapide de la qualité d'impression de la couche sensible à la pression. En effet, le fait d'imprimer cette couche sur les conducteurs des électrodes permet de créer, sans étape d'impression supplémentaire, des zones test sur la feuille support, dans lesquelles une couche ayant une forme et une aire déterminées est imprimée entre deux segments conducteurs. Le test se réduit alors à une simple mesure de la résistance de cette couche entre les deux segments conducteurs et, par conséquent, on peut facilement contrôler la conformité aux spécifications de la couche sensible à la pression. En créant ces zones test à plusieurs endroits de la feuille, on peut de même contrôler l'uniformité d'impression de cette couche sur toute la surface de la feuille. De cette manière on peut donc contrôler la qualité des capteurs produits avant leur assemblage final.

Grâce à l'utilisation des points 10 en argent pour ajuster la sensibilité des capteurs individuels, il devient possible de produire des détecteurs d'occupation de siège qui présentent des zones à sensibilités différentes sans devoir utiliser différents matériaux sensibles à la pression. En effet, la sensibilité de chaque capteur de force peut être adaptée par une modification du nombre et de la disposition géométrique des inclusions 10 dans la couche en matériau sensible à la pression respective.

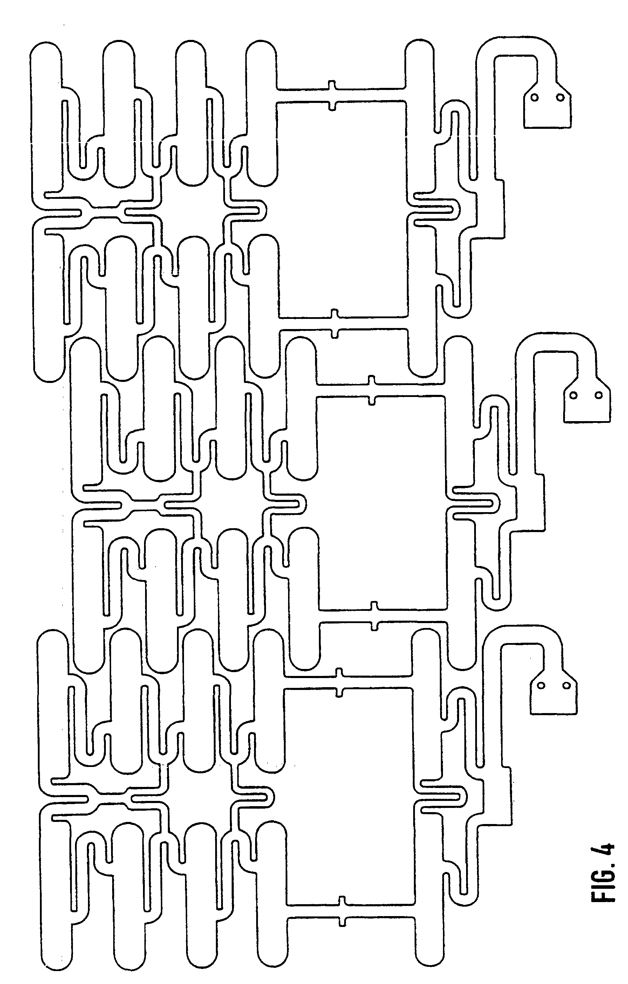

De plus et comme décrit plus haut, l'utilisation d'un adhésif permet une très grande liberté de design pour les détecteurs d'occupation de siège. La forme du détecteur peut alors être optimisée afin de réduire les pertes de matériel lors du découpage du détecteur. Une telle forme de détecteur est représentée sur la fig. 3. Elle permet de fabriquer plusieurs détecteurs sur une seule feuille de substrat, tout en minimisant les rognures par une disposition adaptée des détecteurs sur la feuille. Une telle disposition, dans laquelle les détecteurs adjacents s'engrènent mutuellement, est p.ex. représentée sur la fig. 4.

## Revendications

1. Capteur de force (10) comprenant
deux électrodes (22, 24) en matériau conducteur, les deux électrodes (22, 24) étant disposées de manière espacées sur un premier support (12) isolant, chacune desdites deux électrodes (22, 24) étant revêtue d'une couche en matériau sensible à la pression (28, 30), les deux couches en matériau sensible à la pression (28, 30) étant électriquement isolées l'une par rapport à l'autre, et
un élément de contact (26) en matériau conducteur qui est placé à distance des deux électrodes (22, 24), ledit élément de contact (26) étant adapté pour être pressé contre lesdites électrodes (22, 24) lorsqu'une force est exercée sur le capteur de force (10)
**caractérisé en ce que** chaque électrode (22, 24) comprend un conducteur (32, 34) placé substantiellement à la périphérie d'une zone active (18) du capteur (10), et **en ce que** la couche en matériau sensible à la pression (28, 30) recouvrant chaque électrode (22, 24) s'étend vers l'intérieur de la zone active, les deux couches sensibles à la pression (28, 30) étant séparées par un interstice (36) qui passe sensiblement par le centre de la zone active (18).

2. Capteur de force selon la revendication 1, **caractérisé en ce que** la couche sensible à la pression (28, 30) comprend des microsaillies à la surface, de telle manière que la résistance de surface entre la couche (28, 30) et l'élément de contact (26) diminue avec la pression exercée sur la jonction entre la couche (28, 30) et l'élément de contact (26).

3. Capteur de force (10) selon l'une des revendications 1 à 2, **caractérisé en ce que** la couche sensible à la pression (28, 30) comprend un matériau, dont la résistance spécifique varie inversement avec une compression dudit matériau.

4. Capteur de force (10) selon l'une des revendications 1 à 3, **caractérisé en ce que** la couche en matériau sensible à la pression (28, 30) comprend des inclusions (38) de matériau conducteur, lesdites inclusions (38) en matériau conducteur étant disposées de manière à modifier la résistance spécifique de la couche en matériau sensible à la pression (28, 30).

5. Capteur de force (10) selon l'une des revendications précédentes, **caractérisé en ce que** l'élément de contact (26) en matériau conducteur comprend une couche en matériau conducteur appliquée sur un deuxième support (14) flexible, ledit deuxième support (14) étant disposé à distance dudit premier support (12) à l'aide d'un écarteur (16) situé à l'extérieur d'une zone active (18), de sorte qu'à l'intérieur de ladite zone active (18), la couche en matériau conducteur fasse face auxdites électrodes (22, 24).

6. Capteur de force (10) selon la revendication 5, **caractérisé en ce que** ledit écarteur (16) comprend un adhésif imprimable, ledit adhésif servant à coller ledit premier substrat (12) audit deuxième substrat (14).

7. Capteur de force (10) selon la revendication 6, **caractérisé par** des particules écarteurs (20) disposées à l'intérieur dudit adhésif imprimable, lesdites particules (20) ayant un diamètre correspondant substantiellement à l'espacement désiré des deux substrats.

8. Détecteur d'occupation d'un siège, comprenant un ou plusieurs capteurs de force selon l'une des revendications 1 à 7.

## Patentansprüche

1. Kraftsensor (10), der umfasst
zwei Elektroden (22, 24) aus leitendem Werkstoff, wobei die beiden Elektroden (22, 24) derart im Abstand voneinander auf einem ersten isolierenden Träger (12) angeordnet und jede der beiden Elektroden (22, 24) mit einer Schicht aus druckempfindlichem Werkstoff (28, 30) überzogen und die beiden Schichten aus druckempfindlichem Werkstoff (28, 30) elektrisch voneinander isoliert sind, und
ein Kontaktelement (26) aus leitendem Werkstoff; das in Entfernung von den beiden Elektroden (22, 24) angeordnet ist, wobei das Kontaktelement (26) so ausgelegt ist, dass es gegen die beiden Elektroden (22, 24) gedrückt wird, wenn eine Kraft auf den Kraftsensor (10) ausgeübt wird,
**dadurch gekennzeichnet, dass** jede Elektrode (22, 24) einen Leiter (32, 34) umfasst, der im wesentlichen an der Peripherie einer aktiven Zone (18) des Kraftsensors (10) angebracht ist, und dass die Schicht aus druckempfindlichem Werkstoff (28, 30), die jede Elektrode (22, 24) bedeckt, sich in das Innere der aktiven Zone erstreckt, wobei die beiden druckempfindlichen Schichten (28, 30) durch einen Spaltraum (36) voneinander getrennt sind, der ungefähr durch das Zentrum der aktiven Zone (18) verläuft.

2. Kraftsensor nach Anspruch 1 **dadurch gekennzeichnet, dass** die druckempfindliche Schicht (28, 30) Mikrovorsprünge auf der Oberfläche umfasst, so dass der Oberflächenwiderstand zwischen der Schicht (28, 30) und dem Kontaktelement (26) sich mit dem auf die Verbindung zwischen der Schicht (28, 30) und dem Kontaktelement (26) ausgeübten Druck verringert.

3. Kraftsensor (10) nach einem der Ansprüche 1 bis 2 **dadurch gekennzeichnet, dass** die druckempfindliche Schicht (28, 30) einen Werkstoff umfasst, dessen spezifischer Widerstand sich umgekehrt mit einer Kompression dieses Werkstoffs verändert.

4. Kraftsensor (10) nach einem der Ansprüche 1 bis 3 **dadurch gekennzeichnet, dass** die druckempfindliche Schicht (28, 30) Einschlüsse (38) aus leitendem Werkstoff umfasst, wobei diese Einschlüsse (38) aus leitendem Werkstoff derart angeordnet sind, dass sie den spezifischen Widerstand der Schicht aus druckempfindlichem Werkstoff (28, 30) verändern.

5. Kraftsensor (10) nach einem der vorstehenden Ansprüche **dadurch gekennzeichnet, dass** das Kontaktelement (26) aus leitendem Werkstoff eine Schicht aus leitendem Werkstoff umfasst, die auf einen zweiten flexiblen Träger (14) aufgetragen ist, wobei der zweite Träger (14) vom ersten Träger (12) entfernt angeordnet ist mit Hilfe eines außerhalb einer aktiven Zone (18) befindlichen Abstandshalters (16), so dass im Innern der aktiven Zone (18) die Schicht aus leitendem Werkstoff den Elektroden (22, 24) gegenüber steht.

6. Kraftsensor (10) nach Anspruch 5 **dadurch gekennzeichnet, dass** der Abstandshalter (16) einen druckbaren Klebstoff umfasst, wobei dieser Klebstoff dazu dient, das erste Substrat (12) an das zweite Substrat (14) anzukleben.

7. Kraftsensor (10) nach Anspruch 6 **gekennzeichnet durch** Abstand haltende Teilchen (20), die im Innern des druckbaren Klebstoffs angeordnet sind, wobei diese Teilchen (20) einen Durchmesser aufweisen, der im wesentlichen dem gewünschten Abstand der beiden Substrate entspricht.

8. Fühler zum Erkennen der Belegung eines Sitzes, der einen oder mehrere Kraftsensoren nach einem der Ansprüche 1 bis 7 umfasst.

## Claims

1. Force sensor (10) comprising
two electrodes (22, 24) made of a conducting material, the two electrodes (22, 24) being arranged on a first insulating support (12) in such a way that they are separated from each other, each of said two electrodes (22, 24) being coated with a layer of pressure-sensitive material (28, 30), the two layers of pressure-sensitive material (28, 30) being electrically insulated from each other, and
a contact element (26) made of a conducting material which is arranged at a certain distance from the two electrodes (22, 24), said contact element (26) being pressed against said electrodes (22, 24) when a force is exerted on the force sensor (10)
**characterised in that** each electrode (22, 24) comprises a conductor arranged substantially on the periphery of an active zone (18) of the sensor (10), and **in that** the layer of pressure-sensitive material (28, 30) covering each electrode (22, 24) extends towards the interior of the active zone, the two pressure-sensitive layers (28, 30) being separated by an interstice (36) that passes roughly through the centre of the active surface (18).

2. Force sensor according to Claim 1, **characterised in that** the pressure-sensitive layer (28, 30) comprises microprojections on the surface, so that the surface resistance between the layer (28, 30) and the contact element (26) decreases with the pressure exerted on the junction between the layer (28, 30) and the contact element (26).

3. Force sensor (10) according to one of Claims 1 to 2, **characterised in that** the pressure-sensitive material (28, 30) comprises a material whose specific resistance varies inversely with a compression of said material.

4. Force sensor (10) according to one of Claims 1 to 3, **characterised in that** the layer of pressure-sensitive material (28, 30) comprises inclusions (38) of conducting material, said inclusions (38) of conducting material being arranged so as to change the specific resistance of the layer of pressure-sensitive material (28, 30).

5. Force sensor (10) according to one of the preceding claims, **characterised in that** the contact element (26) made of a conducting material comprises a layer of conducting material applied to a second flexible support (14), said second support (14) being arranged at a distance from said first support (12) using a separator (16) located outside an active zone (18) so that, in the interior of said active zone (18), the layer of conducting material is opposite said electrodes (22, 24).

6. Force sensor (10) according to Claim 5, **characterised in that** said separator (16) comprises a printable adhesive, said adhesive serving to stick said first substrate (12) to said second substrate (14).

7. Force sensor (10) according to Claim 6, **characterised by** separator particles (20) arranged inside said printable adhesive, said particles (20) having a diameter substantially equal to the desired spacing of the two substrates.

8. Seat-occupancy detector comprising one or more force sensors according to one of Claims 1 to 7.
